# EUROPEAN PATENT APPLICATION

(11) **EP 4 620 787 A1**
(43) Date of publication of application: **24.09.2025**
(21) Application number: 25156445.6
(22) Date of filing: 07.02.2025
(51) Int. Cl.: B62D 21/15, B60K 1/04, B62D 25/02, B62D 25/20

(54) **LOWER VEHICLE-BODY STRUCTURE OF A VEHICLE**

(30) Priority: 21.03.2024 JP 2024044810
(71) Applicant: MAZDA MOTOR CORPORATION, Hiroshima 730-8670 (JP)
(72) Inventor: Kamemoto, Eiji, Aki-gun, Hiroshima, 730-8670 (JP)
(74) Representative: Herrmann, Uwe

(57) **Abstract**

[Problem] To provide a lower vehicle-body structure of a vehicle that can certainly increase an amount of energy absorption in a side collision.

[Means for Solution] A vehicle body 1 includes a first reinforcement 5, a second reinforcement 6, and a third reinforcement 7 which are disposed in a closed crosssection 2a of a side sill 2. The first reinforcement 5 has a hat shape which includes an upper wall 5a, a lower wall 5b, and a vertical wall 5c extending in an up-down direction. The second reinforcement 6 forms a plurality of first closed cross-sections 8 in cooperation with the upper wall 5a. The third reinforcement 7 forms a plurality of second closed cross-sections 8 in cooperation with the lower wall 5b.

## Description

### [Technical Field]

The present invention relates to a lower vehicle-body structure of a vehicle.

### [Background Art]

In a side collision, in which the lateral side of a vehicle collides with an obstacle, such as a pole, a large collision energy is input to a side sill, which is a component of the side portion of a vehicle body. Transmission of energy from the side sill to the inside of the vehicle body may affect occupants inside the vehicle body or on-vehicle components. Particularly in the case of an electric vehicle (EV), such transmission of energy may affect a battery pack disposed on the vehicle-width-direction inner side relative to the side sill. To avoid such effects, it is necessary for the side sill to absorb energy.

In view of the above, various structures have been conventionally proposed in which a reinforcement member forming a hollow closed cross-section is provided in a side sill to absorb energy in a side collision. For example, in a vehicle-body structure described in Patent Literature 1, a reinforcement member having a substantially M-shaped cross section and made of sheet metal is provided in a side sill. The reinforcement member is disposed such that two protruding portions which form an M-shaped cross section are directed toward the vehicle-width-direction outer side, and the reinforcement member forms a hollow closed cross-section together with the side sill.

In this structure, the hollow closed cross-section formed by the two protruding portions of the reinforcement member, which has a substantially M-shaped cross section, is compressed in the vehicle width direction in a side collision, thus absorbing energy.

### [Citation List]

### [Patent Literature]

[Patent Literature 1] Japanese Translation of PCT International Application Publication No. 2023-522161

### [Summary of Invention]

### [Problem to be Solved by the Invention]

However, depending on the conditions of the side collision, there are concerns that the above-mentioned reinforcement member, which is disposed in the side sill, and which has a substantially M-shaped cross section, is deformed in an unintended manner such that the closed cross-section formed by the protruding portions is not compressed in the vehicle width direction as expected in a side collision, and is compressed while deviating in the up-down direction. In such a case, there is a possibility that a loss in the amount of energy absorption occurs in the reinforcement member, so that a target amount of energy absorption cannot be obtained.

The present invention has been made in view of such circumstances, and it is an object of the present invention to provide a lower vehicle-body structure of a vehicle that can certainly increase an amount of energy absorption in a side collision.

### [Means for Solving the Problem]

To solve the above-mentioned problem, a lower vehicle-body structure of a vehicle of the present invention includes a pair of left and right side sills each of which constitutes a closed cross-section extending in a vehicle front-rear direction on a vehicle-width-direction outer side of a vehicle body; and a first reinforcement, a second reinforcement, and a third reinforcement which are reinforcement members disposed in the closed cross-section, and the lower vehicle-body structure is characterized in that the first reinforcement includes an upper wall and a lower wall fixed to a wall of the side sill on a vehicle-width-direction inner side and extending in a vehicle width direction and a front-rear direction, and a vertical wall extending in an up-down direction from an end portion of the upper wall on a vehicle-width-direction outer side to an end portion of the lower wall on the vehicle-width-direction outer side, the first reinforcement having a hat shape that projects toward the vehicle-width-direction outer side, and that is open toward the vehicle-width-direction inner side, the second reinforcement forms a plurality of first closed cross-sections, which are arranged in the vehicle front-rear direction, in cooperation with the upper wall when viewed in a side view of the vehicle, and the third reinforcement forms a plurality of second closed cross-sections, which are arranged in the vehicle front-rear direction, in cooperation with the lower wall when viewed in the side view of the vehicle.

In such a configuration, in a side collision of the vehicle, the second reinforcement and the third reinforcement are axially compressed from the vehicle-width-direction outer side, thus absorbing energy. Consequently, out-of-plane deformation of the first reinforcement, that is, bending of the upper wall toward the upper side and deformation of the lower wall toward the lower side are suppressed. As a result, deformation of the first reinforcement, disposed in the side sill, in the up-down direction is suppressed and hence, it is possible to certainly increase an amount of energy absorption in a side collision.

In the above-mentioned lower vehicle-body structure of a vehicle, it is preferable that the second reinforcement be fixed to an upper surface of the upper wall, and the third reinforcement be fixed to a lower surface of the lower wall.

With such a configuration, the second reinforcement and the third reinforcement are disposed in such a way as to be distant from each other in the up-down direction with the first reinforcement interposed therebetween, and can absorb energy at a position outward of the first reinforcement. Therefore, it is possible to further suppress out-of-plane deformation of the first reinforcement.

In the above-mentioned lower vehicle-body structure of a vehicle, it is preferable that the side sills each include a side sill outer portion and a side sill inner portion, the side sill inner portion being disposed on the vehicle-width-direction inner side relative to the side sill outer portion, and being joined to the side sill outer portion, and the vertical wall be disposed on the vehicle-width-direction outer side relative to a joined portion between the side sill outer portion and the side sill inner portion.

With such a configuration, a side collision load from the vehicle-width-direction outer side can be quickly and certainly transmitted from the side sill outer portion to the vertical wall of the first reinforcement.

In the above-mentioned lower vehicle-body structure of a vehicle, it is preferable that the first closed cross-sections each have a polygonal structure having a plurality of ridges extending in the vehicle width direction.

With such a configuration, each first closed cross-section having a polygonal structure has the plurality of ridges extending in the vehicle width direction and hence, it is possible to certainly increase an amount of energy absorption in a side collision.

In the above-mentioned lower vehicle-body structure of a vehicle, it is preferable that the second closed cross-sections each have a polygonal structure having a plurality of ridges extending in the vehicle width direction.

With such a configuration, each second closed cross-section having a polygonal structure has the plurality of ridges extending in the vehicle width direction and hence, it is possible to certainly increase an amount of energy absorption in a side collision.

In the above-mentioned lower vehicle-body structure of a vehicle, it is preferable that the second reinforcement and the third reinforcement have different rigidities.

With such a configuration, it is possible to suitably change distribution of a load transmitted to the inside of the vehicle body via the second reinforcement and the third reinforcement having different rigidities.

In the above-mentioned lower vehicle-body structure of a vehicle, it is preferable that the lower vehicle-body structure further include a cross member that extends in the vehicle width direction to connect the pair of left and right side sills with each other, and the first closed cross-sections be each disposed at a position that overlaps with the cross member, when viewed in the side view of the vehicle.

With such a configuration, a collision load input to the first closed cross-section, which is formed by the upper wall of the first reinforcement and the second reinforcement, in a side collision can be smoothly transmitted to the cross member.

In accordance with a preferred embodiment the second reinforcement and/or the third reinforcement have side walls which are slanted relative to the vertical direction and/or have a top wall which is slanted relative to the horizontal direction.

Further, at least one of the first closed cross-sections and/or at least one of the second closed cross-sections have a cross sectional area which increases in the vehicle-width direction from the outer side to the inner side.

Preferably, at least one of the first closed cross-sections and/or at least one of the second closed cross-sections have a cross sectional area which is constant in the vehicle-width direction.

Furthermore, at least some of the first closed cross-sections have the same size and/or at least some of the second closed cross-sections have the same size.

In accordance with a further preferred embodiment the vertical wall is a flat wall.

The first closed cross-sections are preferably spaced apart from each other and/or the second cross-sections are preferably spaced apart from each other.

The outer edge of the first closed cross-section and/or the outer edge of the second closed cross-section is preferably offset to the inner side with regard to the vertical wall in the vehicle-width-direction.

The present invention further relates to a vehicle comprising the lower vehicle-body structure of a vehicle according to the present invention. In particular the vehicle is a battery-electric vehicle.

### [Advantageous Effect of Invention]

As described above, according to the lower vehicle-body structure of a vehicle of the present invention, it is possible to certainly increase an amount of energy absorption in a side collision.

### [Brief Description of Drawings]

FIG. 1 is a plan view of a vehicle body, showing the overall configuration of a lower vehicle-body structure of a vehicle according to an embodiment of the present invention.
FIG. 2 is an enlarged view, with a part cut away, showing the arrangement of a side sill, cross members, and a first reinforcement and a second reinforcement which are disposed in the side sill shown in FIG. 1.
FIG. 3 is a cross-sectional view taken along line III-III in FIG. 2.
FIG. 4 is an enlarged view of the side sill, and the first to third reinforcements disposed in the side sill shown in FIG. 3.
FIG. 5 is a diagram of the first to third reinforcements shown in FIG. 3 as viewed from the vehicle-width-direction outer side, that is, a diagram when viewed in a side view of the vehicle.
FIG. 6 is an enlarged perspective view of the first to third reinforcements shown in FIG. 5.
FIGs. 7(a) to 7(d) are diagrams showing deformation behavior of the side sill and the first to third reinforcements shown in FIG. 3 in a side collision.
FIG. 8 is a plan view showing, as a modification of the present invention, a structure in which mountain portions of a second reinforcement and mountain portions of cross members having an M-shaped cross section are arranged side by side in the vehicle width direction and, between the cross members, a dimension in the front-rear direction of each mountain portion of the second reinforcement increases as the mountain portion progress toward the vehicle-width-direction inner side.
FIG. 9 is an enlarged perspective view showing the structure in which the dimension in the front-rear direction of the mountain portion of the second reinforcement shown in FIG. 8 increases as the mountain portion progresses toward the vehicle-width-direction inner side.
FIG. 10 is a side view showing, as another modification of the present invention, a structure in which mountain portions of a second reinforcement and mountain portions of a cross member having an M-shaped cross section are arranged side by side in the vehicle width direction at the front part of the vehicle, and mountain portions of the second reinforcement at the rear part of the vehicle have a lower height.

### [Mode for Carrying Out the Invention]

Hereinafter, a lower vehicle-body structure of a vehicle according to an embodiment of the present invention will be described in detail with reference to drawings.

### (Overall configuration of vehicle body 1)

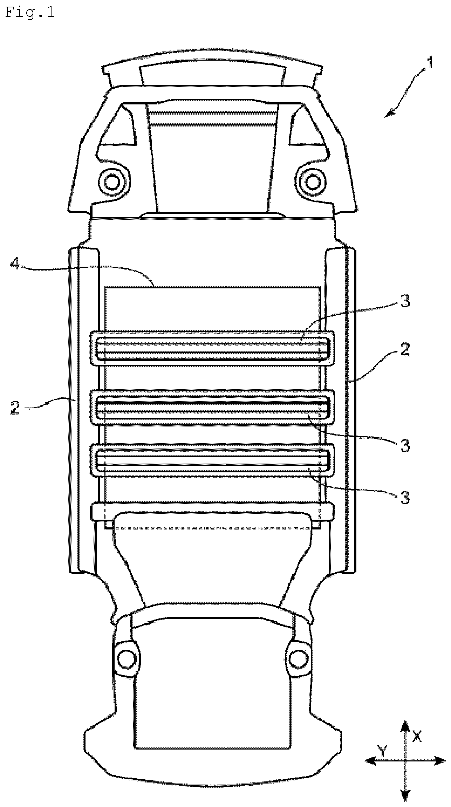

In the present embodiment, for an application example of the lower vehicle-body structure of the present invention, the description will be made by taking, as an example, a vehicle body 1 of an electric vehicle (EV) shown in FIG. 1, the electric vehicle (EV) including a battery pack 4 provided on the lower side of cross members 3. The vehicle body 1 shown in FIGs. 1 to 3 includes a pair of left and right side sills 2, the plurality of cross members 3, the battery pack 4, a first reinforcement (hereinafter referred to as "first rein 5"), a second reinforcement (hereinafter referred to as "second rein 6"), and a third reinforcement 7 (hereinafter referred to as "third rein 7"), the pair of left and right side sills 2 each including a closed cross-section 2a extending in a vehicle front-rear direction X on a vehicle-width-direction outer side Y1 of the vehicle body 1, the plurality of cross members 3 extending in a vehicle width direction Y, the battery pack 4 being disposed on a lower side Z2 of the cross member 3, the first reinforcement, the second reinforcement, and the third reinforcement 7 being three reinforcement members disposed in the closed cross-section 2a.

Each side sill 2 includes a side sill outer portion 21 and a side sill inner portion 22, the side sill outer portion 21 being a part of the side sill 2 on the vehicle-width-direction outer side Y1, the side sill inner portion 22 being a part of the side sill 2 on a vehicle-width-direction inner side Y2. The side sill inner portion 22 is disposed on the vehicle-width-direction inner side Y2 relative to the side sill outer portion 21, and constitutes the side sill 2, including the closed cross-sections 2a, in cooperation with the side sill outer portion 21.

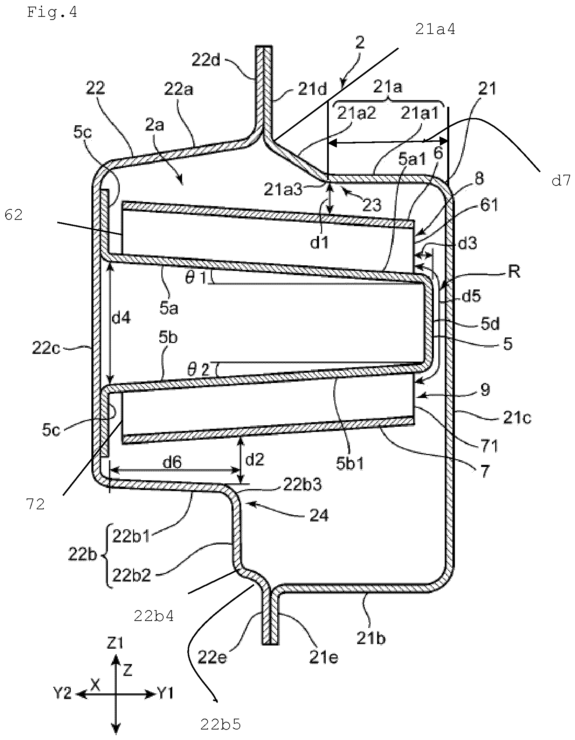

As shown in FIG. 4, the side sill outer portion 21 and the side sill inner portion 22 respectively include deformation promoting portions 23, 24 that promote inward deformation of the side sill 2 in a side collision. The deformation promoting portions 23, 24 will be described in detail later.

As shown in FIG. 4, the side sill outer portion 21 includes an upper wall 21a, a lower wall 21b located on the lower side Z2 relative to the upper wall 21a, an outer wall 21c, an upper flange portion 21d, and a lower flange portion 21e, and is formed from a metal plate or the like. The upper wall 21a and the lower wall 21b are distant from each other in an up-down direction Z, and extend in the vehicle width direction Y and the front-rear direction X. The outer wall 21c is a part that constitutes the side wall of the side sill 2 on the vehicle-width-direction outer side Y1. The outer wall 21c extends in the up-down direction Z to connect the end portion of the upper wall 21a on the vehicle-width-direction outer side Y1 with the end portion of the lower wall 21b on the vehicle-width-direction outer side Y1. The upper flange portion 21d and the lower flange portion 21e extend from the end portion of the upper wall 21a and the end portion of the lower wall 21b on the vehicle-width-direction inner side Y2 in the up-down direction Z in which a distance between the upper flange portion 21d and the lower flange portion 21e increases.

The side sill inner portion 22 includes an upper wall 22a, a lower wall 22b located on the lower side Z2 relative to the upper wall 22a, an inner wall 22c, an upper flange portion 22d, and a lower flange portion 22e, and is formed from a metal plate or the like. The upper wall 22a and the lower wall 22b are distant from each other in the up-down direction Z, and extend in the vehicle width direction Y and the front-rear direction X. The inner wall 22c is a part that constitutes the side wall of the side sill 2 on the vehicle-width-direction inner side Y2. The inner wall 22c extends in the up-down direction Z to connect the end portion of the upper wall 22a on the vehicle-width-direction inner side Y2 with the end portion of the lower wall 22b on the vehicle-width-direction inner side Y2. The upper flange portion 22d and the lower flange portion 22e extend from the end portion of the upper wall 22a and the end portion of the lower wall 22b on the vehicle-width-direction outer side Y1 in the up-down direction Z in which a distance between the upper flange portion 22d and the lower flange portion 22e increases.

The upper flange portion 22d and the lower flange portion 22e of the side sill inner portion 22 are respectively joined by welding or the like to the upper flange portion 21d and the lower flange portion 21e of the side sill outer portion 21. Consequently, the side sill inner portion 22 is joined to the side sill outer portion 21.

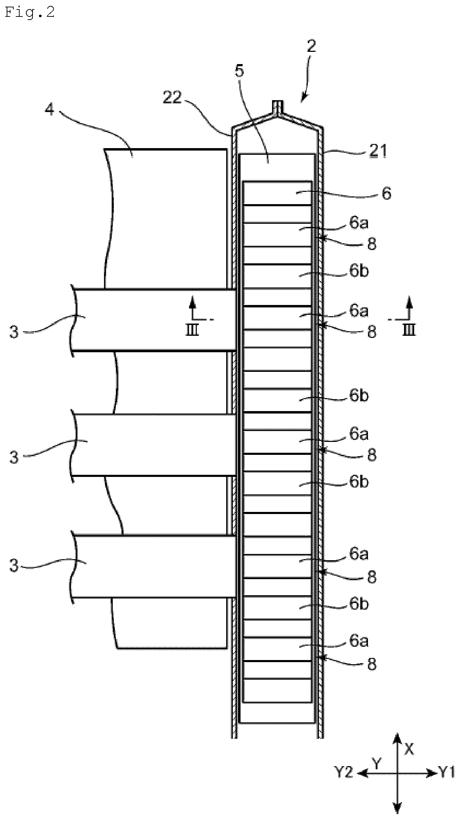

As shown in FIGs. 1 and 2, the plurality of cross members 3 extend in the vehicle width direction Y, are distant from each other in the front-rear direction X, and connect the side sill inner portions 22 of the pair of left and right side sills 2 with each other.
As shown in Fig. 1, there is a gap between the outer side of side sill (2) and outer side of the cross member (3) in the vehicle-width direction, which is that the cross member (3) is offset to inner side in the vehicle-width-direction relative to outer side of the side sill (2) which protects the cross member (3) in the event of a side collision.

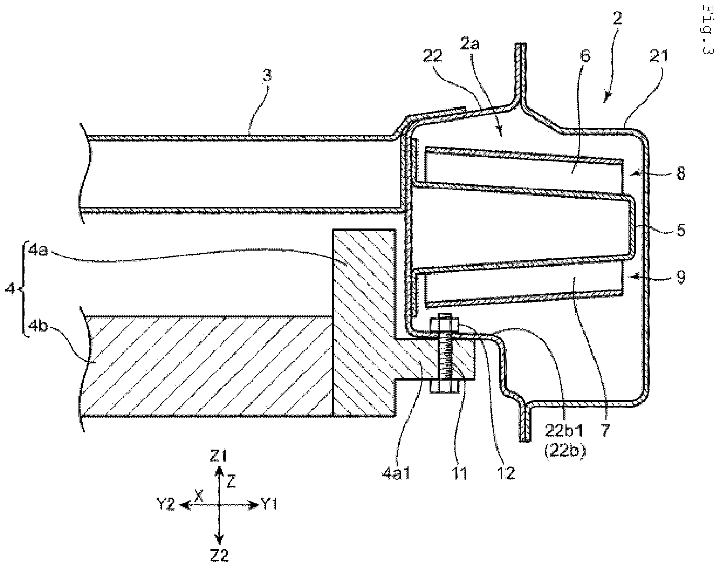

As shown in FIG. 3, the battery pack 4 is disposed at a position below the plurality of cross members 3 and between the pair of left and right side sills 2. The battery pack 4 includes a battery housing 4a and at least one battery module 4b, which is housed in the battery housing 4a. On the side wall of the battery housing 4a, a flange portion 4a1 projects from the outer surface of the side wall toward the vehicle-width-direction outer side Y1.

The battery pack 4 is fixed to the lower walls 22b of the side sill inner portions 22 of the pair of left and right side sills 2. To be more specific, the flange portions 4a1 of the battery housing 4a are fixed to the lower walls 22b (to be more specific, horizontal wall parts 22b1 described later) with bolts 11 and nuts 12.

### (Description of three reinforcement members (first reinforcement 5, second reinforcement 6, and third reinforcement 7))

As shown in FIG. 4, the first reinforcement 5 includes an upper wall 5a, a lower wall 5b located on the lower side Z2 relative to the upper wall 5a, a vertical wall 5d, and a pair of flange portions 5c, and is formed from a metal plate or the like. The upper wall 5a and the lower wall 5b are distant from each other in the up-down direction Z, and extend in the vehicle width direction Y and the front-rear direction X.

The upper wall 5a, the lower wall 5b, the vertical wall 5d, and the pair of flange portions 5c form the first reinforcement 5 having a hat shape that projects toward the vehicle-width-direction outer side Y1, and that is open toward the vehicle-width-direction inner side Y2.

The upper wall 5a in the present embodiment is formed such that as the upper wall 5a progresses toward the vehicle-width-direction inner side Y2, the upper wall 5a inclines in a direction in which the upper wall 5a gradually increases a distance from the lower wall 5b. To be more specific, the upper wall 5a inclines in the direction in which the upper wall 5a directs toward an upper side Z1 as the upper wall 5a directs toward the vehicle-width-direction inner side Y2. An inclination angle θ1 of the upper wall 5a relative to the horizontal direction (vehicle width direction Y) is set to an angle that causes the vertical wall 5d to direct in the horizontal direction when the vertical wall 5d receives a compressive load in the direction toward the vehicle-width-direction inner side Y2 in a side collision.

The lower wall 5b in the present embodiment is formed such that as the lower wall 5b progresses toward the vehicle-width-direction inner side Y2, the lower wall 5b inclines in a direction in which the lower wall 5b increases a distance from the upper wall 5a. To be more specific, the lower wall 5b inclines in the direction in which the lower wall 5b directs toward the lower side Z2 as the lower wall 5b directs toward the vehicle-width-direction inner side Y2. An inclination angle θ2 of the lower wall 5b relative to the horizontal direction (vehicle width direction Y) is set to an angle that causes the vertical wall 5d to direct in the horizontal direction when the vertical wall 5d receives a compressive load in the direction toward the vehicle-width-direction inner side Y2 in a side collision.

The vertical wall 5d is a part that extends in the up-down direction Z to connect the end portion of the upper wall 5a and the end portion of the lower wall 5b on the vehicle-width-direction outer side Y1 with each other. That is, the vertical wall 5d extends in the up-down direction Z from the end portion of the upper wall 5a on the vehicle-width-direction outer side Y1 to the end portion of the lower wall 5b on the vehicle-width-direction outer side Y1.

The vertical wall 5d is disposed on the vehicle-width-direction outer side Y1 relative to the upper flange portions 21d, 22d and the lower flange portions 21e, 22e, which are joined portions between the side sill outer portion 21 and the side sill inner portion 22.

As shown in FIG. 3, it is sufficient that the first reinforcement 5 be disposed at a position that overlaps with the cross member 3 and the battery pack 4 in the up-down direction Z, or in an area between the cross member 3 and the battery pack 4 in the up-down direction Z. Consequently, a collision load received by the first reinforcement 5 in a side collision can be transmitted to the cross member 3 and the battery pack 4 in a dispersed manner.
The cross-member 3 is fixedly connected to the side sill inner portion 22 of the side sill 2.

The pair of flange portions 5c extend from the end portion of the upper wall 5a and the end portion of the lower wall 5b on the vehicle-width-direction inner side Y2, in the up-down direction Z in which a distance between the pair of flange portions 5c increases. The upper wall 5a and the lower wall 5b are fixed to the wall of the side sill 2 on the vehicle-width-direction inner side Y2 (that is, the inner wall 22c of the side sill inner portion 22) via the pair of flange portions 5c.

A method for manufacturing the first reinforcement 5 is not particularly limited. For example, it is preferable to adopt a configuration in which two parts obtained by dividing the first reinforcement 5 in the up-down direction at the vertical wall 5d are formed in advance in an intermediate stage of manufacturing the first reinforcement 5, the second reinforcement 6 and the third reinforcement 7 are then joined by welding or the like to the two divided parts and, thereafter, the two parts are joined with each other by welding or the like. By adopting this manufacturing method, it is possible to easily join the second reinforcement 6 and the third reinforcement 7 to the first reinforcement 5 in a divided state. The first reinforcement 5 may be molded as an integral body from a metal plate or the like.

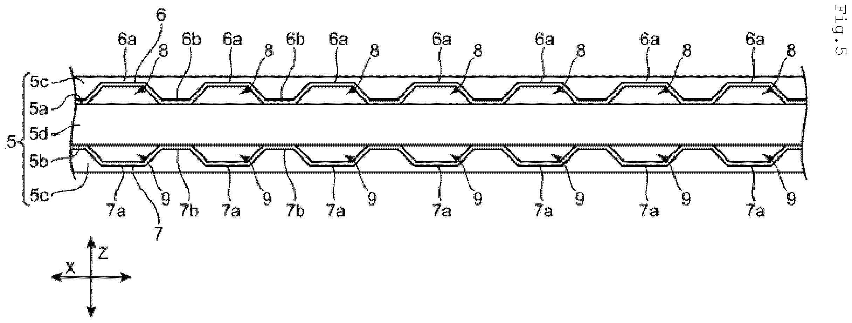

The second reinforcement 6 is a reinforcement member that forms a plurality of first closed cross-sections 8, which are arranged in the vehicle front-rear direction X, in cooperation with the upper wall 5a of the first reinforcement 5 when viewed in the side view of the vehicle shown in FIG. 5.

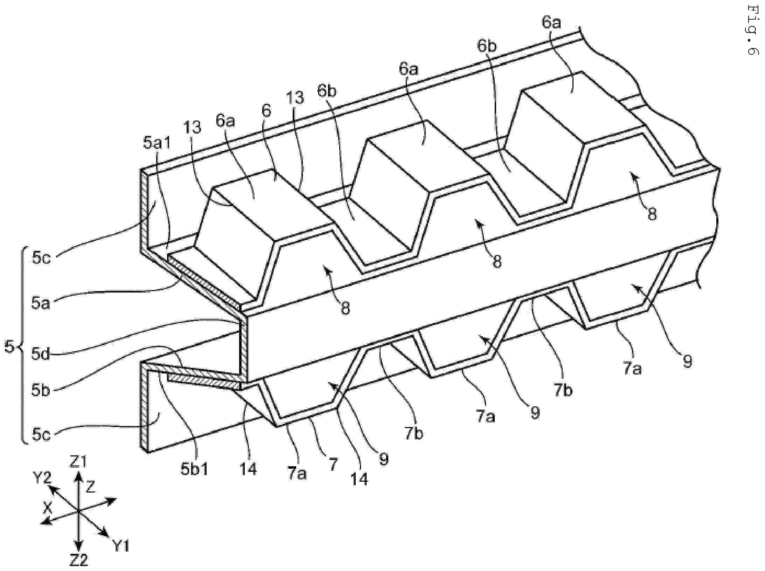

As shown in FIG. 2 to 6, the second reinforcement 6 in the present embodiment is a strip-shaped member that is fixed to the upper wall 5a of the first reinforcement 5, that extends in the vehicle front-rear direction X, and that continuously and repeatedly recesses and protrudes in the up-down direction Z. The second reinforcement 6 includes a plurality of mountain portions 6a and a plurality of valley portions 6b alternately arranged in the vehicle front-rear direction X, and is joined by welding or the like to an upper surface 5a1 of the upper wall 5a at the valley portions 6b. The mountain portions 6a have a substantially trapezoidal shape when viewed in the side view of the vehicle. Accordingly, the first closed cross-sections 8 extending in the vehicle width direction Y and having a trapezoidal shape are formed by the mountain portions 6a and the upper wall 5a. Each first closed cross-section 8 has a polygonal structure having a plurality of ridges 13 extending in the vehicle width direction Y (see FIG. 6). The first closed cross-section 8 is not limited to a trapezoidal shape, and may have another polygonal structure. Alternatively, the first closed cross-section 8 may have a triangular shape.

The first closed cross-sections 8 are disposed at positions that overlap with the cross members 3 when viewed in the side view of the vehicle shown in FIG. 5. That is, as shown in FIGs. 2 and 3, the first closed cross-sections 8 formed at the mountain portions 6a of the second reinforcement 6 are disposed within an area in which the cross members 3 are present in the vehicle front-rear direction X.

The third reinforcement 7 is a reinforcement member that forms a plurality of second closed cross-sections 9, which are arranged in the vehicle front-rear direction X, in cooperation with the lower wall 5b when viewed in the side view of the vehicle shown in FIG. 5.

The third reinforcement 7 in the present embodiment has a shape obtained by inverting the above-mentioned second reinforcement 6 upside down. That is, as shown in FIG. 3 to 6, the third reinforcement 7 is a strip-shaped member that is fixed to the lower wall 5b of the first reinforcement 5, that extends in the vehicle front-rear direction X, and that continuously and repeatedly recesses and protrudes in the up-down direction Z. The third reinforcement 7 includes a plurality of mountain portions 7a and a plurality of valley portions 7b alternately arranged in the vehicle front-rear direction X, and is joined by welding or the like to a lower surface 5b1 of the lower wall 5b at the valley portions 7b. The mountain portions 7a have a substantially trapezoidal shape when viewed in the side view of the vehicle. Accordingly, the second closed cross-sections 9 extending in the vehicle width direction Y and having a trapezoidal shape are formed by the mountain portions 7a and the lower wall 5b. Each second closed cross-section 9 has a polygonal structure having a plurality of ridges 14 extending in the vehicle width direction Y (see FIG. 6). The second closed cross-section 9 is also not limited to a trapezoidal shape, and may have another polygonal structure. Alternatively, the second closed cross-section 9 may have a triangular shape.

It is sufficient that the second reinforcement 6 have a shape that can form the first closed cross-sections 8 in cooperation with the upper wall 5a of the first reinforcement 5, and the third reinforcement 7 have a shape that can form the second closed cross-sections 9 in cooperation with the lower wall 5b of the first reinforcement 5. Accordingly, each of the second reinforcement 6 and the third reinforcement 7 is not limited to a continuous strip-shaped member shown in FIG. 2 and FIGs. 5 and 6, and may be formed of a plurality of members having a hat shape including at least one mountain portion 6a, 7a.

The second reinforcement 6 and the third reinforcement 7 may have different rigidities. In such a case, it is possible to suitably change distribution of load transmitted to the inside of the vehicle body via the second reinforcement 6 and the third reinforcement 7 in a side collision. The above-mentioned "rigidity" refers to bending rigidity against a side collision load.

As shown in FIGs. 3 and 4, when the positional relationship between the vertical wall 5d of the first reinforcement 5 and the second reinforcement 6 in the present embodiment is observed, the vertical wall 5d of the first reinforcement 5 is disposed on the vehicle-width-direction outer side Y1 relative to an outer end portion 61 of the second reinforcement 6 on the vehicle-width-direction outer side Y1. That is, the outer end portion 61 of the second reinforcement 6 is located at a position spaced apart from the outer surface of the vertical wall 5d of the first reinforcement 5 by a distance d3 toward the vehicle-width-direction inner side Y2. Further, an inner end portion 62 of the second reinforcement 6 is located at a position spaced apart from the inner surface of the inner wall 22c of the sill inner portion 22 and the inner surface of the flange portion 5c of the first reinforcement 5 toward the vehicle-width-direction outer side Y1. Further, an end portion 71 of the third reinforcement 7 is located at a position spaced apart from the outer surface of the vertical wall 5d of the first reinforcement 5 by the distance d3 toward the vehicle-width-direction inner side Y2. Further, an inner end portion 72 of the third reinforcement 7 is located at a position spaced apart from the inner surface of the inner wall 22c of the sill inner portion 22 and the inner surface of the flange portion 5c of the first reinforcement 5 toward the vehicle-width-direction outer side Y1.

As shown in FIG. 4, an entire length d5 of a region R is set to be equal to a distance d4 in the up-down direction Z between the end portion of the upper wall 5a of the first reinforcement 5 on the vehicle-width-direction inner side Y2 and the end portion of the lower wall 5b of the first reinforcement 5 on the vehicle-width-direction inner side Y2, the region R including the vertical wall 5d of the first reinforcement 5 and extending in the up-down direction Z and the vehicle width direction Y, the region R being disposed on the vehicle-width-direction outer side Y1 relative to the end portion 61 of the second reinforcement 6 on the vehicle-width-direction outer side Y1 and the end portion 71 of the third reinforcement 7 on the vehicle-width-direction outer side Y1.

### (Deformation promoting portion 23 of the side sill outer portion 21)

As shown in FIG. 4, the second reinforcement 6 in the present embodiment is disposed on the surface of the upper wall 5a which faces the outside of the first reinforcement 5, that is, on the upper surface 5a1 of the upper wall 5a.

The side sill outer portion 21 in the present embodiment includes a corner portion 21a3 described below that forms a deformation promoting portion 23 to be deformed inward of the side sill 2 in a side collision of a vehicle in such a way as to be brought into contact with the second reinforcement 6, disposed as described above, from the upper side Z1 (from the outer side in the up-down direction Z).

The side sill outer portion 21 includes the upper wall 21a being a facing wall that extends in the vehicle width direction Y and the vehicle front-rear direction X as described above, and that faces the second reinforcement 6.

The upper wall 21a includes the corner portion 21a3 that has a shape bent inward of the side sill 2, and that projects in the direction approaching the second reinforcement 6 due to the bending, when viewed in the front view of the vehicle shown in FIG. 4. The deformation promoting portion 23 is made up of the corner portion 21a3.

To be more specific, the upper wall 21a in the present embodiment includes a horizontal portion 21a1 and an inclined portion 21a2, the horizontal portion 21a1 extending in the horizontal direction (vehicle width direction Y), the inclined portion 21a2 inclining in the direction in which the inclined portion 21a2 directs toward the upper side Z1 as the inclined portion 21a2 directs toward the vehicle-width-direction inner side Y2. The inclined portion 21a2 connects the horizontal portion 21a1 with the upper flange portion 21d. The upper wall 21a includes the corner portion 21a3 that is formed by the horizontal portion 21a1 and the inclined portion 21a2, and that projects inward of the side sill 2. In the side sill outer portion 21, the horizontal portion 21a1 of the upper wall 21a receives a compressive load in the horizontal direction (vehicle width direction Y) toward the vehicle-width-direction inner side Y2 in a side collision and hence, the upper wall 21a can be certainly bent inward of the side sill 2 by using the corner portion 21a3, forming the deformation promoting portion 23, as a starting point.

The deformation promoting portion 23 in the present embodiment is made up of the corner portion 21a3 of the upper wall 21a, being the facing wall. However, in the case in which the entire upper wall 21a is curved in such a way as to protrude inward of the side sill 2, the entire curved upper wall 21a may be assumed as the deformation promoting portion 23.

The corner portion 21a3 forming the deformation promoting portion 23 shown in FIG. 4 is distant from the second reinforcement 6 in the up-down direction by a distance d1 in the normal state before a side collision. However, the present invention is not limited to such a configuration, and the corner portion 21a3 may be in contact with the second reinforcement 6 in advance. The distance d2 in the up-down direction Z between the corner portion 21a3 and the second reinforcement 6 is set to be smaller than a distance d7 in the vehicle width direction Y between the corner portion 21a3 and the outer wall portion 21c of the sill outer portion 21.

Further, the distance d2 in the up-down direction Z between the corner portion 21a3 and the second reinforcement 6 is set to be smaller than a length of a straight line connecting the corner portion 21a3 and a corner portion 21a4 connecting the upper wall 21a with the upper flange portion 21d, i.e. smaller than the length of the inclined portion 21a2.

### (Deformation promoting portion 24 of side sill inner portion 22)

As shown in FIG. 4, the third reinforcement 7 in the present embodiment is disposed on the surface of the lower wall 5b which faces the outside of the first reinforcement 5, that is, on the lower surface 5b1 of the lower wall 5b.

The side sill inner portion 22 in the present embodiment includes a corner portion 22b3 described below that forms a deformation promoting portion 24 to be deformed inward of the side sill 2 in a side collision of a vehicle in such a way as to be brought into contact with the third reinforcement 7, disposed as described above, from the lower side Z2 (from the outer side in the up-down direction Z).

The side sill inner portion 22 includes the lower wall 22b being a facing wall that extends in the vehicle width direction Y and the vehicle front-rear direction X as described above, and that faces the third reinforcement 7.

The lower wall 22b includes the corner portion 22b3 that has a shape bent inward of the side sill 2, and that projects inward of the side sill 2 due to the bending, when viewed in the front view of the vehicle shown in FIG. 4. The deformation promoting portion 24 is made up of the corner portion 22b3.

The lower wall 22b in the present embodiment includes the horizontal wall part 22b1 and a lower wall part 22b2, the horizontal wall part 22b1 extending in the horizontal direction (vehicle width direction Y) and facing the third reinforcement 7, the lower wall part 22b2 extending from the end portion of the horizontal wall part 22b1 on the vehicle-width-direction outer side Y1 toward the lower side Z2 as a distancing wall part extending in the direction away from the third reinforcement 7. The corner portion 22b3 is formed by the horizontal wall part 22b1 and the lower wall part 22b2.

A distance d2 in the up-down direction Z between lower end of the third reinforcement 7 and the corner portion 22b3 is set to be smaller than a length d6 of the horizontal wall part 22b1 in the vehicle width direction Y.

Further, a distance d2 in the up-down direction Z between the lower end of the third reinforcement 7 and the corner portion 22b3 is set to be smaller than a length of a straight line connecting the corner portion 22b3 with a corner portion 22b5 connecting the lower wall 22b to the lower flange portion 22e.

Further, in the embodiment, the lower wall part 22b2 (also referred to as distancing wall part) comprises a further corner portion 22b4 bending towards the outside of the side sill, the corner portion 22b4 being arranged between the corner portion 22b3 and a corner portion 22b5 connecting the lower wall 22b to the lower flange portion 22e.

The deformation promoting portion 24 in the present embodiment is made up of the corner portion 22b3 of the lower wall 22b, being the facing wall. However, in the case in which the entire lower wall 22b is curved in such a way as to protrude inward of the side sill 2, the entire curved lower wall 22b may be assumed as the deformation promoting portion 24.

The corner portion 22b3 forming the deformation promoting portion 24 shown in FIG. 4 is distant from the third reinforcement 7 by the distance d2 in the normal state before a side collision. However, the present invention is not limited to such a configuration, and the corner portion 22b3 may be in contact with the third reinforcement 7 in advance.

### (Deformation behavior of side sill 2 and first reinforcement 5 to third reinforcement 7 in side collision)

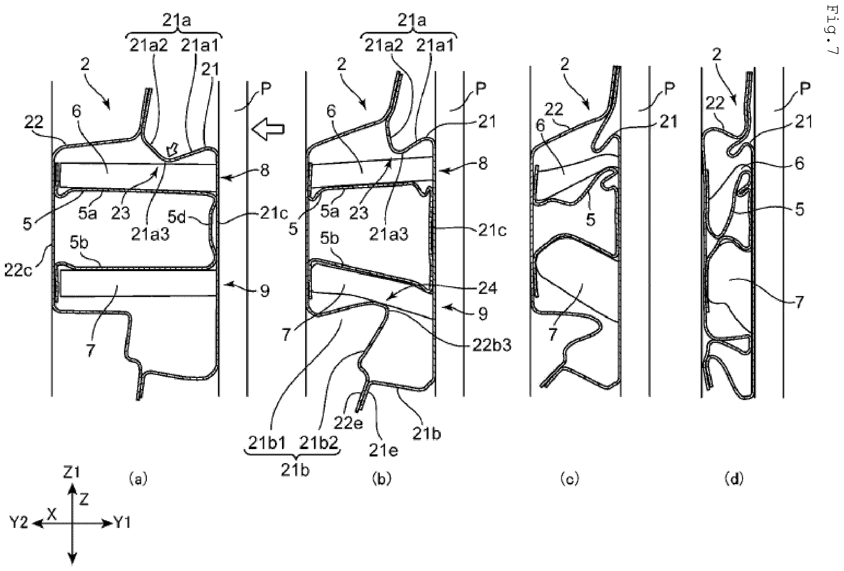

In the vehicle body 1 having the above-mentioned configuration, as shown in FIGs. 7(a) to 7(d), when an obstacle, such as a pole P, collides from the vehicle-width-direction outer side Y1 toward the vehicle-width-direction inner side Y2 (in a side collision), the side sill outer portion 21 is compressed, and the first reinforcement 5, the second reinforcement 6, and the third reinforcement 7, being the three reinforcement members which are disposed in the side sill 2, absorb energy while being deformed to achieve an increase in the amount of energy absorption.

To be more specific, in a side collision initial stage shown in FIG. 7(a), the outer wall 21c of the side sill outer portion 21 is pushed by the pole P, thus being moved toward the vehicle-width-direction inner side Y2, and the corner portion 21a3 of the upper wall 21a, being the deformation promoting portion 23 of the side sill outer portion 21, enters the side sill 2, thus promoting bending deformation of the upper wall 21a. Simultaneously, the corner portion 21a3 pinches the second reinforcement 6 from the upper side Z1.

The vertical wall 5d of the first reinforcement 5 is pushed by the outer wall 21c toward the vehicle-width-direction inner side Y2, so that the vertical wall 5d of the first reinforcement 5 and portions of the first reinforcement 5 around the vertical wall 5d are caused to extend in the up-down direction Z. Consequently, the upper wall 5a and the lower wall 5b of the first reinforcement 5 are caused to direct in the horizontal direction (vehicle width direction Y) as shown in FIG. 7(a) from the inclined state shown in FIG. 4. Therefore, the second reinforcement 6 and the third reinforcement 7, and the first closed cross-sections 8 formed by the second reinforcement 6 and the second closed cross-sections 9 formed by the third reinforcement 7 are caused to direct in horizontal direction, and are axially compressed in a horizontal state.

In the side collision initial stage to a side collision middle stage shown in FIG. 7(b), a collision load is transmitted to the lower wall 22b of the side sill inner portion 22 via the lower wall 21b of the side sill outer portion 21 and hence, the corner portion 22b3 of the lower wall 22b, being the deformation promoting portion 24 of the side sill inner portion 22, enters the side sill 2, thus promoting bending deformation of the lower wall 22b. Simultaneously, the corner portion 22b3 pinches the third reinforcement 7 from the lower side Z2.

As described above, the second reinforcement 6 and the third reinforcement 7, which form the first closed cross-sections 8 and the second closed cross-sections 9 in cooperation with the upper wall 5a and the lower wall 5b of the first reinforcement 5, are axially compressed in the horizontal direction, thus suppressing out-of-plane deformation of the upper wall 5a and the lower wall 5b of the first reinforcement 5 in which the upper wall 5a or the lower wall 5b are moved in the up-down direction Z. Simultaneously, it is possible to suppress unintentional deformation or the like of the first reinforcement 5, that is, deformation in which the first reinforcement 5 is compressed while deviating in the up-down direction Z.

As described above, out-of-plane deformation of the first reinforcement 5 is suppressed, and the second reinforcement 6 and the third reinforcement 7 are axially compressed in a horizontal state and hence, the first reinforcement 5, the second reinforcement 6, and the third reinforcement 7 can achieve ideal compression deformation shown in FIGs. 7(a) to 7(d) in which unintentional deviation in the up-down direction Z does not occur. Accordingly, it is possible to significantly increase an amount of energy absorption.

### (Main features of the present embodiment)

(1) In the lower vehicle-body structure of a vehicle of the present embodiment, the first reinforcement 5, the second reinforcement 6, and the third reinforcement 7, being the three reinforcement members, are disposed in the closed cross-section 2a of the side sill 2.

When the second reinforcement 6 is viewed in the side view of the vehicle shown in FIG. 5, the second reinforcement 6 forms the plurality of first closed cross-sections 8, which are arranged in the vehicle front-rear direction X, in cooperation with the upper wall 5a of the first reinforcement 5. The third reinforcement 7 forms the plurality of second closed cross-sections 9, which are arranged in the vehicle front-rear direction X, in cooperation with the lower wall 5b.

Due to the above-mentioned structure, in a side collision of a vehicle, the second reinforcement 6 and the third reinforcement 7 are axially compressed from the vehicle-width-direction outer side Y1, thus absorbing energy. Consequently, out-of-plane deformation of the first reinforcement 5, that is, bending of the upper wall 5a toward the upper side Z1 and deformation of the lower wall 5b toward the lower side Z2 are suppressed. As a result, deformation of the first reinforcement 5, disposed in the side sill 2, in the up-down direction Z is suppressed and hence, it is possible to certainly increase an amount of energy absorption in a side collision.

(2)
In the lower vehicle-body structure of a vehicle of the present embodiment, as shown in FIG. 4, the second reinforcement 6 is fixed to the upper surface 5a1 of the upper wall 5a. The third reinforcement 7 is fixed to the lower surface 5b1 of the lower wall 5b.

With this configuration, the second reinforcement 6 and the third reinforcement 7 are disposed in such a way as to be distant from each other in the up-down direction Z with the first reinforcement 5 interposed therebetween, and can absorb energy at a position outward of the first reinforcement 5. Therefore, it is possible to further suppress out-of-plane deformation of the first reinforcement 5.

(3)
In the lower vehicle-body structure of a vehicle of the present embodiment, the vertical wall 5d of the first reinforcement 5 is disposed on the vehicle-width-direction outer side Y1 relative to the upper flange portions 21d, 22d and the lower flange portions 21e, 22e, which are the joined portions between the side sill outer portion 21 and the side sill inner portion 22. With this configuration, a side collision load from the vehicle-width-direction outer side Y1 can be quickly and certainly transmitted from the side sill outer portion 21 to the vertical wall 5d of the first reinforcement 5.

(4)
In the lower vehicle-body structure of a vehicle of the present embodiment, as shown in FIG. 5, each of the first closed cross-sections 8 formed by the second reinforcement 6 and the upper wall 5a has a polygonal structure having the plurality of ridges 13 extending in the vehicle width direction Y. With this configuration, each first closed cross-section 8 having a polygonal structure has the plurality of ridges 13 extending in the vehicle width direction Y and hence, it is possible to certainly increase an amount of energy absorption in a side collision.

(5)
In the lower vehicle-body structure of a vehicle of the present embodiment, each of the second closed cross-sections 9 formed by the third reinforcement 7 and the lower wall 5b has a polygonal structure having the plurality of ridges 14 extending in the vehicle width direction Y. With this configuration, each second closed cross-section 9 having a polygonal structure has the plurality of ridges 14 extending in the vehicle width direction Y and hence, it is possible to certainly increase an amount of energy absorption in a side collision.

(6)
In the lower vehicle-body structure of a vehicle of the present embodiment, the second reinforcement 6 and the third reinforcement 7 have different rigidities. With this configuration, it is possible to suitably change distribution of a load transmitted to the inside of the vehicle body via the second reinforcement 6 and the third reinforcement 7 having different rigidities.

(7)
In the lower vehicle-body structure of a vehicle of the present embodiment, the first closed cross-sections 8 formed by the second reinforcement 6 and the upper wall 5a are disposed at positions that overlap with the cross members 3 when viewed in the side view of the vehicle shown in FIG. 5.

With this configuration, a collision load input to the first closed cross-sections 8, which are formed by the upper wall 5a of the first reinforcement 5 and the second reinforcement 6, in a side collision can be smoothly transmitted to the cross members 3 (see FIGs. 2 and 3) located on the vehicle-width-direction inner side Y2 relative to the first closed cross-sections 8. Consequently, it is possible to further enhance impact resistance performance against a side collision.

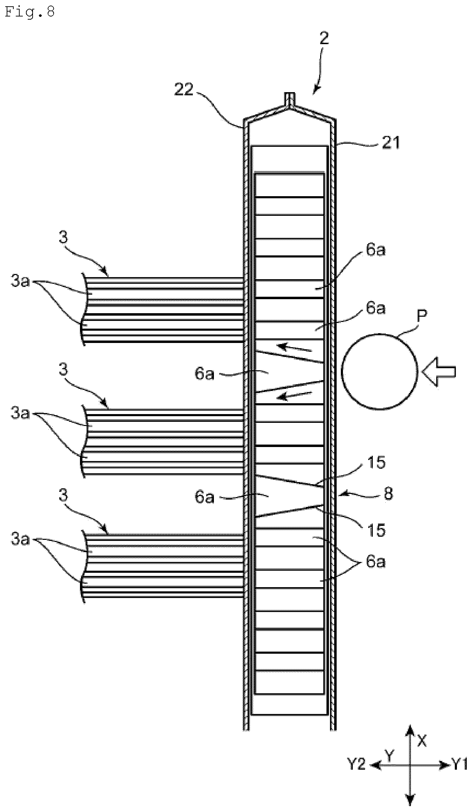

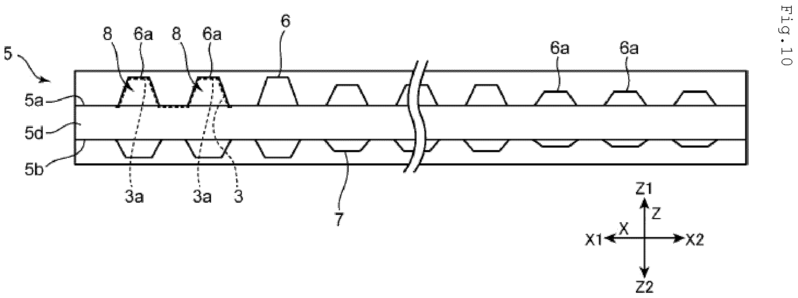

In the case in which, as a modification of the present invention, as shown in FIG. 8 and FIG. 10, each cross member 3 includes mountain portions 3a projecting upward, thus the cross member 3 has an M-shaped cross section, by disposing the cross members 3 at positions at which positions of the mountain portions 6a of the second reinforcement 6 overlap with the positions of the mountain portions 3a of the cross members 3 when viewed in the side view of the vehicle, a collision load input to the first closed cross-sections 8, which are formed by the mountain portions 6a, can be smoothly transmitted to closed cross-sections formed by the mountain portions 3a of the cross members 3 and hence, it is possible to further enhance impact resistance performance against a side collision. Of the mountain portions 6a of the second reinforcement 6 shown in FIG. 10, the mountain portions 6a disposed on the vehicle rear side X2 in an area where the battery pack 4 is not present on the vehicle inner side are not required to have high rigidity and hence, such mountain portions 6a may have a low height.
As shown in FIG. 8 some of the mountain portions 6a of the second reinforcement 6 have a constant shape in the vehicle-width direction and some of the mountain portions 6a of the second reinforcement 6 have an increasing width to the inner side in the vehicle-width direction in a top view. The same may apply in addition or in an alternative to the mountain portions 7a of the third reinforcement 7.

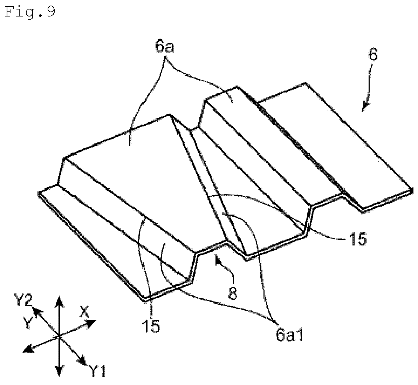

As another modification of the present invention, as shown in FIG. 8 to 9, it can be considered for each mountain portion 6a of a second reinforcement 6 which is disposed between two cross members 3 distant from each other in the vehicle front-rear direction X to have a shape in which the dimension in the front-rear direction X increases as the mountain portion 6a progresses toward the vehicle-width-direction inner side Y2. Such a shape causes ridges 15 of the first closed cross-section 8, which is formed by the mountain portion 6a, to direct toward the cross members 3 and hence, it is possible to smoothly transmit a collision load, via the ridges 15, also to the cross members 3 located at positions deviated from the mountain portions 6a in the front-rear direction X.

### (Other features of the present embodiment)

Other features of the present embodiment are as described in the following (8) to (19).

(8)
As shown in FIG. 4, in the lower vehicle-body structure of a vehicle of the present embodiment, the upper wall 5a is formed such that as the upper wall 5a progresses toward the vehicle-width-direction inner side Y2, the upper wall 5a inclines in an upward direction Z1, in which the upper wall 5a gradually increases a distance from the lower wall 5b. The second reinforcement 6 forms the plurality of first closed cross-sections 8, which are arranged in the vehicle front-rear direction X, in cooperation with the upper wall 5a when viewed in the side view of the vehicle shown in FIG. 5.

With this configuration, when a collision load is input to the first reinforcement 5 through the vertical wall 5d in a side collision, the first reinforcement 5 is deformed out of plane in the up-down direction Z. At this time, the inclined upper wall 5a is turned by using the end portion thereof on the vehicle-width-direction inner side Y2 as the rotation center, thus being directed in the horizontal direction (vehicle width direction Y). Consequently, the first closed cross-sections 8, which are formed by the upper wall 5a and the second reinforcement 6, are axially compressed in a horizontal state. As a result, it is possible to more certainly increase an amount of energy absorption in a side collision.

(9)
As shown in FIG. 4, in the lower vehicle-body structure of a vehicle of the present embodiment, the lower wall 5b is formed such that as the lower wall 5b progresses toward the vehicle-width-direction inner side Y2, the lower wall 5b inclines in the downward direction Z2, in which the lower wall 5b increases a distance from the upper wall 5a. The third reinforcement 7 forms the plurality of second closed cross-sections 9, which are arranged in the vehicle front-rear direction X, in cooperation with the lower wall 5b when viewed in the side view of the vehicle shown in FIG. 5.

With this configuration, the first reinforcement 5 is deformed out of plane in the up-down direction Z in a side collision and hence, the inclined lower wall 5b is turned by using the end portion thereof on the vehicle-width-direction inner side Y2 as the rotation center, thus being directed in the horizontal direction (vehicle width direction Y). Consequently, the second closed cross-sections 9, which are formed by the lower wall 5b and the third reinforcement 7, are axially compressed in a horizontal state. As a result, it is possible to more certainly increase an amount of energy absorption in a side collision.

(10)
In the lower vehicle-body structure of a vehicle of the present embodiment, the vertical wall 5d is disposed on the vehicle-width-direction outer side Y1 relative to the end portion 61 of the second reinforcement 6 on the vehicle-width-direction outer side Y1.

With this configuration, while the vertical wall 5d of the first reinforcement 5 is moved toward the vehicle-width-direction inner side Y2, and then reaches the end portion 61 of the second reinforcement 6 on the vehicle-width-direction outer side Y1 in the process of the first reinforcement 5 being deformed out of plane in the up-down direction Z in a side collision, the inclined upper wall 5a can be certainly directed in the horizontal direction.

(11)
In the lower vehicle-body structure of a vehicle of the present embodiment, the entire length d5 of the region R is equal to the distance d4 in the up-down direction Z between the end portion of the upper wall 5a of the first reinforcement 5 on the vehicle-width-direction inner side Y2 and the end portion of the lower wall 5b of the first reinforcement 5 on the vehicle-width-direction inner side Y2, the region R including the vertical wall 5d of the first reinforcement 5, and being disposed on the vehicle-width-direction outer side Y1 relative to the end portion 61 of the second reinforcement 6 on the vehicle-width-direction outer side Y1 and the end portion 71 of the third reinforcement 7 on the vehicle-width-direction outer side Y1.

With this configuration, in the process of the first reinforcement 5 being deformed out of plane in the up-down direction Z in a side collision, the region R of the first reinforcement 5 is caused to extend in the up-down direction Z while being compressed toward the vehicle-width-direction inner side Y2, the region R being disposed on the vehicle-width-direction outer side Y1 relative to the end portion 61 of the second reinforcement 6 on the vehicle-width-direction outer side Y1 and the end portion 71 of the third reinforcement 7 on the vehicle-width-direction outer side Y1. In the state in which the region R is caused to extend in the up-down direction Z, the length d5 of the region R in the up-down direction Z is equal to the distance d4 in the up-down direction Z between the end portion of the upper wall 5a on the vehicle-width-direction inner side Y2 and the end portion of the lower wall 5b on the vehicle-width-direction inner side Y2, and the region R formed by the upper wall 5a, the lower wall 5b, and the vertical wall 5d forms a rectangular-shaped cross section when viewed in the front view of the vehicle. Consequently, while the vertical wall 5d of the first reinforcement 5 advances toward the vehicle-width-direction inner side Y2 in a side collision, and then reaches the end portions 61, 71 of the second reinforcement 6 and the third reinforcement 7 on the vehicle-width-direction outer side Y1, the inclined upper wall 5a and the inclined lower wall 5b can be certainly directed in the horizontal direction.

(12)
In the lower vehicle-body structure of a vehicle of the present embodiment, the second reinforcement 6 is disposed on the upper surface 5a1 of the upper wall 5a which faces the outside of the first reinforcement 5. The side sill outer portion 21 includes the deformation promoting portion 23 (the corner portion 21a3 in the present embodiment) to be deformed inward of the side sill 2 in a side collision of a vehicle in such a way as to be brought into contact with the second reinforcement 6 from the upper side Z1 (from the outer side in the up-down direction Z).

With this configuration, in a side collision, the deformation promoting portion 23 of the side sill outer portion 21 is deformed inward of the side sill 2, and is then brought into contact with the second reinforcement 6. Consequently, the second reinforcement 6 is pinched between the deformation promoting portion 23 and the upper wall 5a of the first reinforcement 5, so that deformation of the second reinforcement 6 in the up-down direction Z is restricted, which ensures axial compression of the first closed cross-sections 8 formed by the upper wall 5a and the second reinforcement 6 to take place. As a result, it is possible to more certainly increase an amount of energy absorption in a side collision.

(13)
In the lower vehicle-body structure of a vehicle of the present embodiment, the side sill outer portion 21 includes the upper wall 21a, being the facing wall that extends in the vehicle width direction Y and the vehicle front-rear direction X, and that faces the second reinforcement 6. The upper wall 21a includes the corner portion 21a3 that is bent inward of the side sill 2, thus projecting in the direction approaching the second reinforcement 6 when viewed in the front view of the vehicle shown in FIG. 4. The deformation promoting portion 23 is made up of the corner portion 21a3.

With this configuration, in a side collision, the upper wall 21a of the side sill outer portion 21 is bent and deformed inward by using the corner portion 21a3, forming the deformation promoting portion 23, as a starting point. Consequently, the corner portion 21a3 forming the deformation promoting portion 23 is deformed while entering inside of the side sill 2, and is then brought into contact with the second reinforcement 6. Consequently, the second reinforcement 6 is pinched between the corner portion 21a3 and the upper wall 5a of the first reinforcement 5, so that deformation of the second reinforcement 6 in the up-down direction Z is restricted, which ensures axial compression of the first closed cross-sections 8 formed by the upper wall 5a and the second reinforcement 6 to take place.

(14)
In the lower vehicle-body structure of a vehicle of the present embodiment, the upper wall 5a of the first reinforcement 5 is formed such that as the upper wall 5a progresses toward the vehicle-width-direction inner side Y2, the upper wall 5a inclines in the upward direction Z1, in which the upper wall 5a gradually increases a distance from the lower wall 5b. With this configuration, the first reinforcement 5 is deformed out of plane in a side collision and hence, the inclined upper wall 5a is turned, by using the end portion of the upper wall 5a on the vehicle-width-direction inner side Y2 as a pivot, in the direction approaching the deformation promoting portion 23 of the side sill outer portion 21. Accordingly, the second reinforcement 6 is pushed in the direction approaching the deformation promoting portion 23 by the turned upper wall 5a. Consequently, the corner portion 21a3 forming the deformation promoting portion 23 can pinch the second reinforcement 6 between the corner portion 21a3 and the upper wall 5a with a small force.

(15)
In the lower vehicle-body structure of a vehicle of the present embodiment, the upper wall 5a is disposed at a position higher than the lower wall 5b. The deformation promoting portion 23 is formed at the upper portion of the side sill outer portion 21. With this configuration, it is possible to push the second reinforcement 6 from above by the deformation promoting portion 23 formed at the upper portion of the side sill outer portion 21. Consequently, it is possible to certainly pinch the second reinforcement 6 by the deformation promoting portion 23 and the upper wall 5a.

(16)
In the lower vehicle-body structure of a vehicle of the present embodiment, the third reinforcement 7 is disposed on the lower surface 5b1 of the lower wall 5b of the first reinforcement 5, the lower surface 5b1 facing the outside of the first reinforcement 5. The side sill inner portion 22 includes the deformation promoting portion 24 (the corner portion 22b3 in the present embodiment) to be deformed inward of the side sill 2 in a side collision of a vehicle in such a way as to be brought into contact with the third reinforcement 7 from the lower side Z2 (from the outer side in the up-down direction Z).

With this configuration, in a side collision, the deformation promoting portion 24 of the side sill inner portion 22 is deformed inward of the side sill 2, and is then brought into contact with the third reinforcement 7. Consequently, the third reinforcement 7 is pinched between the deformation promoting portion 24 and the lower wall 5b of the first reinforcement 5, so that deformation of the third reinforcement 7 in the up-down direction Z is restricted, which ensures axial compression of the second closed cross-sections 9 formed by the lower wall 5b and the third reinforcement 7 to take place. As a result, it is possible to more certainly increase an amount of energy absorption in a side collision.

(17)
In the lower vehicle-body structure of a vehicle of the present embodiment, the side sill inner portion 22 includes the lower wall 22b being a facing wall that extends in the vehicle width direction Y and the vehicle front-rear direction X, and that faces the third reinforcement 7. The lower wall 22b includes the corner portion 22b3 that is bent inward of the side sill 2, thus projecting inward of the side sill 2 when viewed in the front view of the vehicle shown in FIGs. 3 and 4. The deformation promoting portion 24 is made up of the corner portion 22b3.

With this configuration, in a side collision, the facing wall of the side sill inner portion 22 is bent and deformed inward by using the corner portion 22b3, forming the deformation promoting portion 24, as a starting point. Consequently, the corner portion 22b3 forming the deformation promoting portion 24 is deformed while entering inside of the side sill 2, and is then brought into contact with the third reinforcement 7. Consequently, the third reinforcement 7 is pinched between the corner portion 22b3 and the lower wall 5b of the first reinforcement 5, so that deformation of the third reinforcement 7 in the up-down direction Z is restricted, which ensures axial compression of the second closed cross-sections 9 formed by the lower wall 5b and the third reinforcement 7 to take place.

(18)
In the lower vehicle-body structure of a vehicle of the present embodiment, the lower wall 22b of the side sill inner portion 22 includes the horizontal wall part 22b1 and the lower wall part 22b2, the horizontal wall part 22b1 extending in the vehicle width direction Y, and facing the third reinforcement 7, the lower wall part 22b2 extending from the end portion of the horizontal wall part 22b1 on the vehicle-width-direction outer side Y1 toward the lower side Z2 as the distancing wall part extending in the direction away from the third reinforcement 7.

The corner portion 22b3 is formed by the horizontal wall part 22b1 and the lower wall part 22b2.

The distance d2 in the up-down direction Z between the lower end of the third reinforcement 7 and the corner portion 22b3 is set to be smaller than the length d6 of the horizontal wall part 22b1 in the vehicle width direction Y. Consequently, in a side collision, the third reinforcement 7 is certainly pinched between the corner portion 22b3 and the lower wall 5b of the first reinforcement 5, which further ensures axial compression of the second closed cross-sections 9 formed by the lower wall 5b and the third reinforcement 7 to take place.

(19)
The lower vehicle-body structure of a vehicle of the present embodiment includes the battery pack 4 disposed between the pair of left and right side sills 2. The battery pack 4 is fixed to the horizontal wall part 22b1 of the lower wall 22b, being the facing wall of the side sill inner portion 22. With this configuration, in a side collision, the corner portion 22b3, being the deformation promoting portion 24, can certainly pinch the third reinforcement 7 between the corner portion 22b3 and the lower wall 5b in cooperation with the battery pack 4 fixed to the lower wall 22b.

### (Application range of the present invention)

In the above-mentioned embodiment, for the application example of the lower vehicle-body structure of the present invention, the description is made by taking, as the example, the vehicle body 1 of an electric vehicle (EV) shown in FIG. 1. However, the present invention is widely applicable to general automobiles aside from EVs, provided that the vehicle includes side sills.

### [Reference Signs List]

- 1: vehicle body
- 2: side sill
- 2a: closed cross-section
- 3: cross member
- 4: battery pack
- 5: first reinforcement (first rein)
- 5a: upper wall
- 5b: lower wall
- 5d: vertical wall
- 6: second reinforcement (second rein)
- 7: third reinforcement (third rein)
- 8: first closed cross-section
- 9: second closed cross-section
- 21: side sill outer portion
- 21a: upper wall
- 21b: lower wall
- 21b3: corner portion
- 22: side sill inner portion
- 22a: upper wall
- 22b: lower wall
- 22b3: corner portion
- 23, 24: deformation promoting portion

## Claims

1. A lower vehicle-body structure of a vehicle, the lower vehicle-body structure comprising:
a pair of left and right side sills (2) each of which constitutes a closed cross-section (2a) extending in a vehicle front-rear direction on a vehicle-width-direction outer side of a vehicle body; and
a first reinforcement (5), a second reinforcement (6), and a third reinforcement (7) which are reinforcement members disposed in the closed cross-section (2a), the lower vehicle-body structure being **characterized in that**
the first reinforcement (5) includes an upper wall (5a) and a lower wall (5b) fixed to a wall (22c) of the side sill (2) on a vehicle-width-direction inner side and extending in a vehicle width direction and a front-rear direction, and a vertical wall (5d) extending in an up-down direction from an end portion of the upper wall (5a) on a vehicle-width-direction outer side to an end portion of the lower wall (5b) on the vehicle-width-direction outer side, the first reinforcement (5) having a hat shape that projects toward the vehicle-width-direction outer side and that is open toward the vehicle-width-direction inner side,
the second reinforcement (6) forms a plurality of first closed cross-sections (8), which are arranged in the vehicle front-rear direction, in cooperation with the upper wall (5a) when viewed in a side view of the vehicle, and
the third reinforcement (7) forms a plurality of second closed cross-sections (9), which are arranged in the vehicle front-rear direction, in cooperation with the lower wall (5b) when viewed in the side view of the vehicle.

2. The lower vehicle-body structure of a vehicle according to claim 1, wherein
the second reinforcement (6) is fixed to an upper surface of the upper wall (5a), and
the third reinforcement (7) is fixed to a lower surface of the lower wall (5b).

3. The lower vehicle-body structure of a vehicle according to claim 1 or 2, wherein
the side sills (2) each include a side sill outer portion (21) and a side sill inner portion (22), the side sill inner portion (22) being disposed on the vehicle-width-direction inner side relative to the side sill outer portion (21), and being joined to the side sill outer portion (21), and
the vertical wall (5d)is disposed on the vehicle-width-direction outer side relative to a joined portion between the side sill outer portion (21) and the side sill inner portion (22).

4. The lower vehicle-body structure of a vehicle according to claim 1 or 2, wherein
the first closed cross-sections (8) each have a polygonal structure having a plurality of ridges extending in the vehicle width direction.

5. The lower vehicle-body structure of a vehicle according to claim 1 or 2, wherein
the second closed cross-sections (9) each have a polygonal structure having a plurality of ridges extending in the vehicle width direction.

6. The lower vehicle-body structure of a vehicle according to claim 1 or 2, wherein
the second reinforcement (6) and the third reinforcement (7) have different rigidities.

7. The lower vehicle-body structure of a vehicle according to claim 1 or 2, wherein the lower vehicle-body structure further comprises a cross member (3) that extends in the vehicle width direction to connect the pair of left and right side sills (2) with each other, and
the first closed cross-sections (8) are each disposed at a position that overlaps with the cross member (3), when viewed in the side view of the vehicle.

8. The lower vehicle-body structure of a vehicle according to anyone of the preceding claims, wherein the second reinforcement (6) and/or the third reinforcement (7) have side walls (6a1) which are slanted relative to the vertical direction and/or have a top wall which is slanted relative to the horizontal direction.

9. The lower vehicle-body structure of a vehicle according to anyone of the preceding claims, wherein at least one of the first closed cross-sections (8) and/or at least one of the second closed cross-sections (9) have a cross sectional area which increases in the vehicle-width direction from the outer side to the inner side.

10. The lower vehicle-body structure of a vehicle according to anyone of the preceding claims, wherein at least one of the first closed cross-sections (8) and/or at least one of the second closed cross-sections (9) have a cross sectional area which is constant in the vehicle-width direction.

11. The lower vehicle-body structure of a vehicle according to anyone of the preceding claims, wherein at least some of the first closed cross-sections (8) have the same size and/or wherein at least some of the second closed cross-sections (9) have the same size.

12. The lower vehicle-body structure of a vehicle according to anyone of the preceding claims, wherein the vertical wall (5d) is a flat wall.

13. The lower vehicle-body structure of a vehicle according to anyone of the preceding claims, wherein the first closed cross-sections (8) are spaced apart from each other and/or wherein the second cross-sections (9) are spaced apart from each other.

14. The lower vehicle-body structure of a vehicle according to anyone of the preceding claims, wherein the outer edge of the first closed cross-section (8) and/or wherein the outer edge of the second closed cross-section (9) is offset to the inner side with regard to the vertical wall (5d) in the vehicle-width-direction.

15. A vehicle comprising the lower vehicle-body structure of a vehicle according to anyone of the preceding claims, in particular a battery-electric vehicle.
